# EUROPÄISCHE PATENTANMELDUNG

(11) **EP 1 122 425 A1**
(43) Veröffentlichungstag der Anmeldung: **08.08.2001**
(21) Anmeldenummer: 01102393.4
(22) Anmeldetag: 02.02.2001
(51) Int. Cl.: F03D 11/00, A62C 3/02

(54) **Windkraftanlage mit einer Brandschutzeinrichtung**

(30) Priorität: 05.02.2000 DE 10005190
(71) Anmelder: Wiemken, Theo, 26427 Esens (DE)
(72) Erfinder: Wiemken, Theo, 26427 Esens (DE)
(74) Vertreter: Jabbusch, Matthias

(57) **Zusammenfassung**

Bei einer Windkraftanlage mit einem Aufnahmeraum für die Aufnahme ihrer Bauteile zum Erzeugen elektrischer Energie, insbesondere für die Aufnahme eines Generators, ist vorgesehen, daß dem Aufnahmeraum eine Brandschutzeinrichtung zum Einbringen eines Löschmittels in den Aufnahmeraum zugeordnet ist.

Bei der erfindungsgemäßen Windkraftanlage ist eine wirksame Bekämpfung eines in ihrem Aufnahmeraum auftretenden Brandes gewährleistet.

## Beschreibung

Die Erfindung betrifft eine Windkraftanlage mit einem Aufnahmeraum für die Aufnahme ihrer Bauteile zum Erzeugen elektrischer Energie, insbesondere für die Aufnahme eines Generators.

Der Aufnahmeraum zur Aufnahme der zum Erzeugen der elektrischen Energie verwendeten Bauteile ist regelmäßig am oberen Ende eines Mastes der Windkraftanlage befindlich. Innerhalb des Aufnahmeraums sind der Generator, gegebenenfalls ein Getriebe sowie die aus dem Aufnahmeraum vorstehende Welle für den Propeller der Windkraftanlage angeordnet. Damit der Propeller einen ausreichenden Abstand zur Erdoberfläche hat, ist seine Welle und somit der mit dieser Welle in Wirkverbindung stehende Generator relativ hoch über der Erdoberfläche anzuordnen. Dazu dient der Mast der Windkraftanlage, der beispielsweise eine Höhe von 80 m aufweisen kann. Der Aufnahmeraum wird durch ein Gehäuse begrenzt, das als Gondel bezeichnet wird.

Beispielsweise aufgrund von Fehlfunktionen kann im Aufnahmeraum ein Brand entstehen. Dadurch können Bauteile zum Erzeugen der elektrischen Energie beschädigt werden, woraus ein Schaden resultiert. Das Löschen eines Brandes im Aufnahmeraum von außen beispielsweise durch Feuerwehrkräfte ist schwierig, weil die Gondel auf dem Mast hoch oberhalb der Erdoberfläche angeordnet ist. Selbst mit einem Leiterfahrzeug ist es für die Feuerwehr nicht möglich, das Ende eines Feuerwehrschlauches auf Höhe der Gondel anzuordnen und somit eine wirksame Brandbekämpfung vorzunehmen. Regelmäßig ist der Brandherd für die Feuerwehr nicht erreichbar.

Der Erfindung liegt die Aufgabe zugrunde, eine Windkraftanlage der eingangs genannten Gattung aufzuzeigen, bei der eine wirksame Bekämpfung eines in ihrem Aufnahmeraum auftretenden Brandes gewährleistet ist.

Diese Aufgabe ist erfindungsgemäß dadurch gelöst, daß dem Aufnahmeraum eine Brandschutzeinrichtung zum Einbringen eines Löschmittels in den Aufnahmeraum zugeordnet ist.

Bei der erfindungsgemäßen Windkraftanlage ist es im Brandfall nicht erforderlich, dem Aufnahmeraum durch eine Feuerwehr von außen ein Löschmittel zuzuführen. Die Windkraftanlage ist vorteilhaft werkseitig mit einer eigenen Brandschutzeinrichtung ausgerüstet. Diese wird im Brandfall ausgelöst und bringt ein Löschmittel in den Aufnahmeraum ein. Mit dem Löschmittel kann der Brand bereits im Zeitpunkt seines Entstehens gelöscht werden, bevor größere Brandschäden auftreten. Die Brandschutzeinrichtung bildet somit einen Selbstschutz der Windschutzanlage vor Bränden in ihrem Aufnahmeraum.

Die Brandschutzeinrichtung kann durch eine Person im Brandfall in den einen Brand löschenden Betriebszustand gesetzt werden. Beispielsweise ist es möglich, in einem der Erdoberfläche zugeordneten Bereich im Mast einen Schalter für die Inbetriebnahme der Brandschutzeinrichtung anzuordnen. Weiterhin ist es möglich, für die Inbetriebnahme der Brandschutzeinrichtung eine beispielsweise drahtlose Ferneinschaltung einzurichten.

Nach einer ersten Weiterbildung der Erfindung ist vorgesehen, daß die Brandschutzeinrichtung im Brandfall selbsttätig auslösend ist. Durch das selbsttätige Auslösen der Brandschutzeinrichtung wird eine automatisierte Überwachung der Windkraftanlage eingerichtet. Tritt im Aufnahmeraum der Windkraftanlage ein Brand auf, so wird die Brandschutzeinrichtung selbsttätig ausgelöst. Die Mitwirkung einer Alarmzentrale oder eines Betreibers der Windkraftanlage ist nicht erforderlich, wodurch vorteilhaft dadurch mögliche Fehler ausgeschlossen sind.

Nach einer weiteren Weiterbildung der Erfindung umfaßt die Brandschutzeinrichtung wenigstens einen innerhalb des Aufnahmeraums angeordneten Temperatursensor. Mit diesem wird die Raumtemperatur innerhalb des Aufnahmeraums vorzugsweise ständig gemessen. Im Temperatursensor kann ein vordefinierter Wert gespeichert sein, mit dem die gemessene Temperatur verglichen wird. Steigt die Temperatur auf bzw. über diesen gespeicherten Wert, löst der Temperatursensor die Brandschutzeinrichtung aus.

Vorzugsweise umfaßt die Brandschutzeinrichtung wenigstens einen innerhalb des Aufnahmeraums angeordneten Rauchmelder. Mit diesem ist eine Rauchentwicklung beispielsweise bereits dann erkennbar, wenn die Raumtemperatur noch nicht den im Temperatursensor gespeicherten, vordefinierten Wert zum Auslösen der Brandschutzeinrichtung erreicht hat. Auch durch den Rauchmelder ist die Brandschutzeinrichtung auslösbar. Temperatursensor und Rauchmelder bilden somit zwei voneinander unabhängige Auslösungsmechanismen der Brandschutzeinrichtung.

Nach einer nächsten Weiterbildung der Erfindung ist vorgesehen, daß die Brandschutzeinrichtung wenigstens eine Löschmittelleitung mit zumindestens einem im Aufnahmeraum angeordneten Austrittselement für das Löschmittel umfaßt. Die Löschmittelleitung dient zum Einbringen des Löschmittels in den Aufnahmeraum. Sie umfaßt dazu mindestens ein Austrittselement, das in das Innere des Aufnahmeraums mündet. Das Löschmittel tritt über das Austrittselement in das Innere des Aufnahmeraums ein und löscht einen dort entstehenden bzw. entstandenen Brand. Die Löschmittelleitung ist vorzugsweise entlang der Windkraftanlagenbauteile zum Erzeugen elektrischer Energie geführt. Vorzugsweise weist die Löschmittelleitung dabei mehrere Austrittselemente für das Löschmittel auf, wobei vorzugsweise jeweils ein Austrittselement einem Bauteil zum Erzeugen elektrischer Energie zugeordnet ist. Über die derart geführte Löschmittelleitung wird das Löschmittel sämtlichen Bauteilen im Aufnahmeraum der Windkraftanlage, an denen ein Brand entstehen kann, zugeführt. Für jedes Bauteil oder für mehrere Bauteile ist dabei vorzugsweise ein Austrittselement vorgesehen, über welches das Löschmittel unmittelbar gegen das Bauteil bzw. die Bauteile führbar ist. Dadurch ist vorteilhaft ein direktes Zuführen des Löschmittels zu einem möglichen Brandherd erreicht. Die Löschmittelleitung ist dabei vorzugsweise innerhalb des Aufnahmeraums angeordnet, so daß sie von außen nicht sichtbar ist.

Jedes Austrittselement ist beispielsweise als Sprenkler ausgebildet. Möglich ist auch, daß jedes Austrittselement als Düse ausgebildet ist. Durch eine Düse geführtes Löschmittel wird aufgrund der Querschnittsverengung der Düse beschleunigt, so daß es beschleunigt in das Innere des Aufnahmeraums eintritt.

Für das Löschmittel ist wenigstens ein Vorratsbehälter vorgesehen, der Teil der Brandschutzeinrichtung ist. Der Vorratsbehälter ist vorzugsweise im Aufnahmeraum der Windkraftanlage angeordnet. Die Löschmittelleitung kann direkt aus diesem Vorratsbehälter herausgeführt sein und entlang der gegen einen Brand zu schützenden Bauteile der Windkraftanlage verlaufen.

Nach einer nächsten Weiterbildung der Erfindung ist vorgesehen, daß die Brandschutzeinrichtung wenigstens eine Steuereinrichtung umfaßt. Die Steuereinrichtung regelt ihre Betriebszustände, weshalb sie vorzugsweise mit einem Schließelement des Vorratsbehälters für das Löschmittel sowie mit dem Temperatursensor und/oder mit dem Rauchmelder verschaltet ist. In der Steuereinrichtung laufen die Informationen vom Temperatursensor und vom Rauchmelder auf. Enthalten diese Informationen eine Anzeige, daß in einem Bereich des Aufnahmeraums ein Brand ausgebrochen ist, führt die Steuereinrichtung durch eine Freigabe des Schließelementes des Vorratsbehälters Löschmittel aus dem Vorratsbehälter in die Löschmittelleitung ein. Über die Löschmittelleitung und über die Austrittselemente wird das Löschmittel in das Innere des Aufnahmeraums eingebracht und der Brand gelöscht.

Vorzugsweise ist die Steuereinrichtung der Brandschutzeinrichtung mit einer Steuereinrichtung der Windkraftanlage verschaltet. Aufgrund dieser Verschaltung kann die Steuereinrichtung der Brandschutzeinrichtung im Brandfall ein Signal an die Steuereinrichtung der Windkraftanlage senden. Geht ein derartiges Signal ein, bewirkt die Steuereinrichtung der Windkraftanlage zum Beispiel ein Anhalten des Propellers sowie ein Ausdemwinddrehen des Propellers. Durch diese Maßnahmen wird die Bekämpfung des Brandes vorteilhaft beschleunigt.

Das Löschmittel kann eine geeignete Löschflüssigkeit bzw. ein geeignetes Löschpulver sein. Nach einer Weiterbildung der Erfindung ist vorgesehen, daß das Löschmittel ein Löschgas ist, das aufgrund seines Aggregatzustandes in alle Bereiche innerhalb des Aufnahmeraums vordringen kann. Dadurch ist vorteilhaft auch ein kleiner Brand an einer unzugänglichen Stelle schnell löschbar.

Zur weiteren Ausbildung der erfindungsgemäßen Windkraftanlage ist schließlich vorgesehen, daß sich die Brandschutzeinrichtung über den Aufnahmeraum hinaus auf wenigstens einen Anordungsbereich für Schaltanlagen der Windkraftanlage erstreckt. Schaltanlagen der Windkraftanlage sind häufig in Schaltschränken angeordnet, die sich regelmäßig im Fußbereich des Mastes der Windkraftanlage befinden. Nach der Weiterbildung kann vorgesehen sein, daß sich die Brandschutzeinrichtung auf derartige Schaltanlagen erstreckt, indem entsprechende Bauteile der Brandschutzeinrichtung zum Überwachen von Temperatur und/oder Rauch im Anordungsbereich für Schaltanlagen angeordnet sind. Zudem kann in diesem Bereich auch ein Abschnitt einer Löschmittelleitung mit einem oder mit mehreren Austrittselementen für das Löschmittel angeordnet sein.

Ausführungsbeispiele der Erfindung, aus denen sich weitere erfinderische Merkmale ergeben, sind in der Zeichnung dargestellt. Es zeigen:
- Fig. 1:: eine teilweise geschnittene Teilseiten ansicht einer ersten Windkraftanlage und
- Fig. 2:: eine teilweise geschnittene Teilseiten ansicht einer zweiten Windkraftanlage.

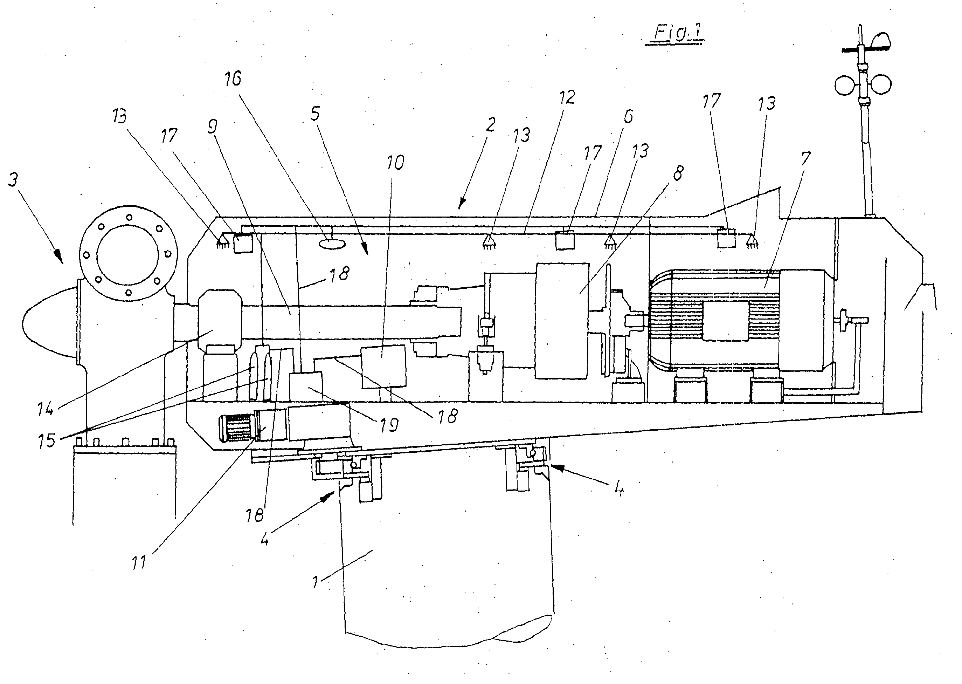

Die Windkraftanlage in Fig. 1 ist mit ihren wesentlichen Bauteilen Mast 1, Gondel 2 und Propeller 3 dargestellt. Der Mast 1 steht auf dem nicht dargestellten Erdboden auf, an seinem oberen Ende ist die Gondel 2 um die Längsmittelachse des Mastes 1 drehbar über Lager 4 angeordnet.

Durch die Gondel 2 wird ein Aufnahmeraum 5 für Bauteile der Windkraftanlage ausgebildet, mit denen elektrische Energie erzeugt wird. Der Aufnahmeraum 5 wird durch ein Gehäuse 6 begrenzt.

Die im Aufnahmeraum 5 angeordneten Bauteile der Windkraftanlage sind im wesentlichen ein Generator 7, ein Getriebe 8 und eine aus dem Aufnahmeraum 5 herausgeführte Welle 9. Am freien, aus dem Aufnahmeraum 5 vorstehenden Ende der Welle 9 ist der Propeller 3 angeordnet. Weitere im Aufnahmeraum 5 angeordnete Bauteile sind eine Steuereinrichtung 10 der Windkraftanlage sowie ein Elektromotor 11 zum Drehen der Gondel 2 auf dem Mast 1.

Dem Aufnahmeraum 5 ist eine erfindungsgemäße Brandschutzeinrichtung zugeordnet. Die Brandschutzeinrichtung umfaßt eine Löschmittelleitung 12, die sich etwa parallel zur verlängerten Längsmittelachse der Welle 9 über den Aufnahmeraum 5 erstreckt. Die Löschmittelleitung 12 ist dabei oberhalb der Bauteile der Windkraftanlage zum Erzeugen elektrischer Energie angeordnet. Dabei ist die Löschmittelleitung 12 mit vier Sprenklern 13 als Austrittselemente für das Löschmittel ausgerüstet. Die Sprenkler 13 sind etwa gleichmäßig über die Längserstrekkung der Löschmittelleitung 12 verteilt, wobei die einzelnen Sprenkler 13 bestimmten Bauelementen der Windkraftanlage zugeordnet sind. Der dem Propeller 3 am nächsten angenäherte Sprenkler 13 ist einem Lager 14 der Welle 9 zugeordnet. Der Sprenkler 13, der am entferntesten vom Propeller 3 ist, weist eine Zuordnung zum Generator 7 auf. Die beiden anderen Sprenkler 13 sind etwa oberhalb des Getriebes 8 angeordnet. Die Löschmittelleitung 12 ist noch mit zwei Vorratsbehältern 15 für das Löschmittel löschmittelleitend verbunden.

Die Brandschutzeinrichtung umfaßt weiterhin einen Rauchmelder 16 sowie drei Temperatursensoren 17. Der Rauchmelder 16 sowie die Temperatursensoren 17 sind über eine Steuerungsleitung 18 mit einer Steuereinrichtung 19 der Brandschutzeinrichtung verschaltet. Diese Steuereinrichtung 19 ist über weitere Steuerungsleitungen 18 mit den Vorratsbehältern 15 für das Löschmittel und mit der Steuereinrichtung 10 der Windkraftanlage verschaltet.

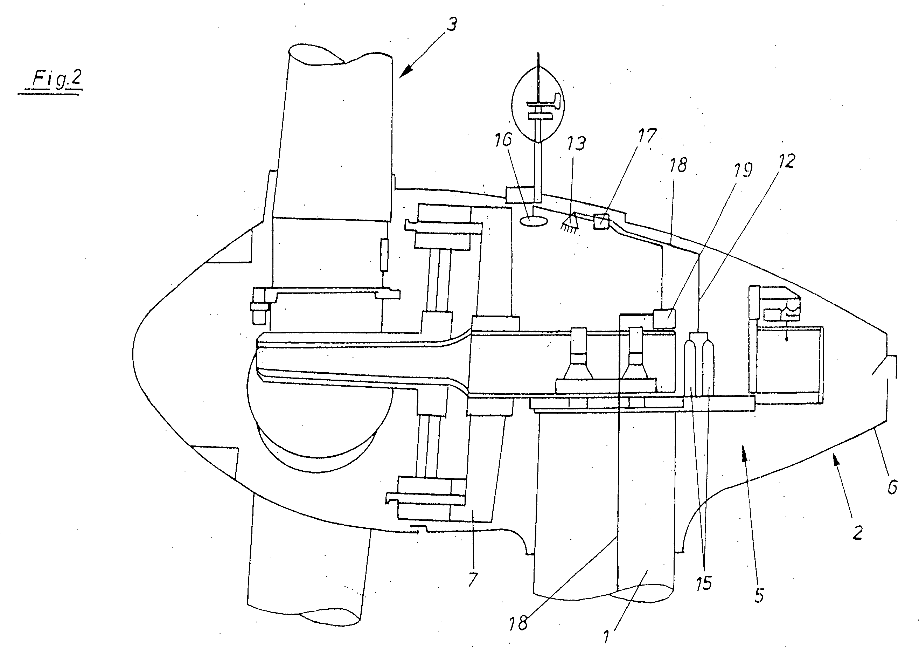

Die Windkraftanlage in Fig. 2 zeichnet sich durch eine gegenüber der Windkraftanlage in Fig. 1 abweichende Bauform ihres Generators 7 als Ringgenerator aus. Die Löschmittelleitung 12 ist bei diesem Ausführungsbeispiel aufgrund der abweichenden Bauform der Gondel 2 kürzer als bei dem Ausführungsbeispiel nach Fig. 1 ausgebildet. Sie verläuft von zwei im Aufnahmeraum 5 angeordneten Vorratsbehältern 15 zu einem Sprenkler 13. Es ist wieder eine Steuereinrichtung 19 für die Brandschutzeinrichtung vorgesehen. Mit dieser sind über eine Steuerungsleitung 18 ein Rauchmelder 16 sowie ein Temperatursensor 17 verschaltet. Die Steuereinrichtung 19 ist darüber hinaus über eine Steuerungsleitung 18 mit der bei dieser Windkraftanlage im unteren Bereich des Mastes 1 angeordneten Steuereinrichtung für die Windkraftanlage verknüpft.

## Patentansprüche

1. Windkraftanlage mit einem Aufnahmeraum für die Aufnahme ihrer Bauteile zum Erzeugen elektrischer Energie, insbesondere für die Aufnahme eines Generators,
**dadurch gekennzeichnet,**
daß dem Aufnahmeraum (5) eine Brandschutzeinrichtung zum Einbringen eines Löschmittels in den Aufnahmeraum (5) zugeordnet ist.

2. Windkraftanlage nach Anspruch 1, dadurch gekennzeichnet, daß die Brandschutzeinrichtung im Brandfall selbsttätig auslösend ist.

3. Windkraftanlage nach Anspruch 1 oder 2, dadurch gekennzeichnet, daß die Brandschutzeinrichtung wenigstens einen innerhalb des Aufnahmeraums (5) angeordneten Temperatursensor (17) umfaßt.

4. Windkraftanlage nach einem der Ansprüche 1 bis 3, dadurch gekennzeichnet, daß die Brandschutzeinrichtung wenigstens einen innerhalb des Aufnahmeraums (5) angeordneten Rauchmelder (16) umfaßt.

5. Windkraftanlage nach einem der vorhergehenden Ansprüche, dadurch gekennzeichnet, daß die Brandschutzeinrichtung wenigstens eine Löschmittelleitung (12) mit mindestens einem in den Aufnahmeraum (5) mündenden Austrittselement für das Löschmittel umfaßt.

6. Windkraftanlage nach Anspruch 5, dadurch gekennzeichnet, daß die Löschmittelleitung (12) entlang ihrer Bauteile zum Erzeugen elektrischer Energie geführt ist.

7. Windkraftanlage nach Anspruch 5 oder 6, dadurch gekennzeichnet, daß die Löschmittelleitung (12) innerhalb des Aufnahmeraums (5) angeordnet ist.

8. Windkraftanlage nach einem der Ansprüche 5 bis 7, dadurch gekennzeichnet, daß das Austrittselement als Sprenkler (13) ausgebildet ist.

9. Windkraftanlage nach einem der Ansprüche 5 bis 7, dadurch gekennzeichnet, daß das Austrittselement als Düse ausgebildet ist.

10. Windkraftanlage nach einem der vorhergehenden Ansprüche, dadurch gekennzeichnet, daß die Brandschutzeinrichtung wenigstens einen Vorratsbehälter (15) für das Löschmittel umfaßt.

11. Windkraftanlage nach Anspruch 10, dadurch gekennzeichnet, daß der Vorratsbehälter (15) im Aufnahmeraum (5) angeordnet ist.

12. Windkraftanlage nach einem der vorhergehenden Ansprüche, dadurch gekennzeichnet, daß die Brandschutzeinrichtung wenigstens eine Steuereinrichtung (19) umfaßt.

13. Windkraftanlage nach Anspruch 12, dadurch gekennzeichnet, daß die Steuereinrichtung (19) der Brandschutzeinrichtung mit einem Schließelement des Vorratsbehälters (15) für das Löschmittel und mit dem Temperatursensor (17) 0 und/oder mit dem Rauchmelder (16) verschaltet ist.

14. Windkraftanlage nach Anspruch 12 oder 13, dadurch gekennzeichnet, daß die Steuereinrichtung (19) der Brandschutzeinrichtung mit einer Steuereinrichtung (10) der Windkraftanlage verschaltet ist.

15. Windkraftanlage nach einem der vorhergehenden Ansprüche, dadurch gekennzeichnet, daß das Löschmittel ein Löschgas ist.

16. Windkraftanlage nach einem der vorhergehenden Ansprüche, dadurch gekennzeichnet, daß sich die Brandschutzeinrichtung über den Aufnahmeraum (5) hinaus auf wenigstens einen Anordnungsbereich für Schaltanlagen der Windkraftanlage erstreckt.
